# FASCICULE DE BREVET EUROPEEN

(11) **EP 3 489 608 B1**
(45) Date de publication et mention de la délivrance du brevet: **12.08.2020**
(21) Numéro de dépôt: 18208760.1
(22) Date de dépôt: 28.11.2018
(51) Int. Cl.: F28D 20/02

(54) **SYSTÈME DE STOCKAGE THERMIQUE (SST) PAR MATÉRIAUX À CHANGEMENT DE PHASE (MCP) COMPRENANT UN DISPOSITIF DE CONTRÔLE DE LA CRISTALLISATION**
THERMALSPEICHERSYSTEM MIT PHASENWECHSELMATERIAL UND EINER VORRICHTUNG ZUR STEUERUNG DER KRISTALLISIERUNG
THERMAL STORAGE SYSTEM WITH PHASE CHANGE MATERIAL AND A DEVICE FOR CONTROLLING CRYSTALLIZATION

(30) Priorité: 28.11.2017 FR 1761306
(43) Date de publication de la demande: 29.05.2019
(73) Titulaire: Commissariat à l'Energie Atomique et aux Energies Alternatives, 75015 Paris (FR); Roquette Frères, 62136 Lestrem (FR)
(72) Inventeur: VESIN, Sébastien, 38100 GRENOBLE (FR); BANDELIER, Philippe, 38240 MEYLAN (FR); BOIT, Baptiste, 59253 LA GORGUE (FR); TOURE, Oumar, 62400 BETHUNE (FR)
(74) Mandataire: Brizio Delaporte, Allison

(56) Documents cités:
- EP-A1- 0 754 744
- EP-A2- 2 927 299
- JP-A- 2001 183 085
- US-A1- 2011 146 940

## Description

### DOMAINE TECHNIQUE DE L'INVENTION

La présente invention concerne les Systèmes de Stockage Thermique (SST) par Matériaux à Changement de Phase (MCP), et plus particulièrement, comprenant un dispositif de contrôle de la cristallisation du MCP.

La présente invention concerne plus particulièrement un SST par MCP comprenant une cuve destinée à contenir un MCP et éventuellement un ciel de gaz au-dessus du MCP, et au moins un dispositif de contrôle de la cristallisation du MCP.

Tous les SST utilisant un MCP présentant des problématiques de surfusion et de vitesse de cristallisation lente sont susceptibles d'être concernés par l'invention.

La présente invention trouvera son application dans les réseaux de chaleur et/ou de froid, urbains, ruraux ou industriels ainsi que dans le stockage de l'énergie solaire. L'invention pourra également trouver des applications dans l'habitat, le transport thermique hors réseaux (camions, bateaux...) et le management thermique de systèmes embarqués.

### ÉTAT DE LA TECHNIQUE

Le stockage de chaleur exploitant la chaleur latente de matériaux à changement de phase (MCP), offre l'avantage d'une densité énergétique de stockage élevée (pouvant dépasser 100 kWh/m³) et la possibilité de stocker de la chaleur à haute température en limitant les considérations de tenue à la pression du système (contrairement par exemple aux systèmes de stockage de chaleur en eau pressurisée surchauffée).

Les MCP considérés sont généralement des paraffines, des sels fondus, des sels hydratés ou des eutectiques, qui présentent souvent comme désavantages soit une faible enthalpie de changement d'état (≤170 kJ/kg), soit une toxicité/nocivité pour l'homme ou pour l'environnement, soit une forte corrosivité, soit des propensions à la ségrégation ou à la non-congruence. Ces inconvénients rendent en l'état leur développement à grande échelle difficilement envisageable et présentent un premier frein au déploiement et à l'exploitation de ces stockages sur des réseaux de chaleur urbains ou industriels.

En réponse à cette problématique, une solution est d'utiliser des polyols, ou sucres alcooliques, et leurs produits dérivés, comme MCP. Outre une bonne, voire très bonne enthalpie de changement d'état (de 200 à 340 kJ/kg, contribuant à la densité énergétique de stockage), ces MCP présentent également de nombreux avantages puisqu'ils sont biosourcés, alimentaires donc non toxiques, non corrosifs, accessibles et bio dégradables. Toutefois, il a été observé que certains matériaux de cette famille présentent une forte propension à la surfusion c'est-à-dire la capacité d'un matériau à rester à l'état liquide lorsque sa température interne est inférieure à sa température de cristallisation, ce qui constitue un inconvénient très pénalisant, expliquant en partie pourquoi leur mise en oeuvre est toujours au niveau de R et D. La conséquence de cet inconvénient s'observe lors de la phase de décharge du système de stockage, étape au cours de laquelle la cristallisation du MCP est déclenchée pour permettre la restitution de la chaleur stockée par le MCP sous forme latente. Or dans les faits, la forte propension à la surfusion caractéristique des polyols utilisés comme MCP rend cette phase difficilement maitrisable et pose donc une vraie problématique pour leur exploitation.

Dans le cadre du projet de recherche Européen SAM.SSA pour "Sugar Alcohol based Materials for Seasonal Storage Applications", différentes voies pour maitriser la cristallisation de ces types de MCP ont été revues.

Certains MCP, par exemple comme les sucres alcooliques et leurs produits dérivés, utilisés pour des applications de stockage de chaleur sont additivés, c'est-à-dire qu'un solvant est ajouté, mélangé, au MCP, de façon à surmonter certains de leur défaut ou inconvénient (surfusion, non-congruence, vieillissement ...). Cette méthode simplifie la mise en oeuvre de ces MCP et conduit même dans certaines situations à permettre tout simplement leur utilisation. Dans ce contexte, le brevet EP 0 754 744 B1 met en évidence que l'ajout de sels organiques, de sels composés de métaux polyvalents ou d'acides gras composés de plus de 16 chaînes carbonées dans la composition du MCP permet de réduire le degré de surfusion de certains polyols comme l'érithrytol, le mannitol ou le galactitol. Cependant, pour certains composés ayant une forte tendance à la surfusion comme le xylitol ou le sorbitol, le brevet constate que l'ajout de tels composés ne permet pas d'observer la cristallisation des composés. Par ailleurs, l'article « The effect of additives on the speed of the crystallization front of Xylitol with various degrees of supercooling » Ari Seppala & al. Helsinki University of Technology, décrit l'étude de l'addition de solvant dans un MCP sur la vitesse de cristallisation du MCP. Le MCP solide est additivé avec le solvant puis le mélange est mis à chauffer jusqu'à ce que la température de fusion du MCP soit atteinte. Le mélange est ensuite mis à refroidir à température ambiante et la vitesse de cristallisation est suivie. Des résultats obtenus montrent une accélération de la vitesse de cristallisation toutefois, celle-ci reste encore très faible et aucune étude sur du long terme, sur des grands volumes et intégrant des fonctionnements en cycles, caractéristiques du stockage de chaleur, ne permettent d'envisager sereinement cette voie pour le moment.

Par ailleurs, le bullage obtenu par l'injection de gaz, notamment de l'air, directement dans le MCP, produit une agitation et des contraintes de cisaillement qui conduisent à la cristallisation du MCP. Cette méthode pour déclencher la cristallisation de sucres alcooliques utilisés comme MCP a été confirmée lors d'essais menés par l'équipe du projet SAM.SSA (Sugar Alcohol based Materials for Seasonal Storage Application).

Les expérimentations menées suivant cette méthode dans le cadre du projet SAM.SSA ont confirmé son efficacité, mais ont également mis en évidence un temps de latence de l'ordre de 30 minutes entre le début du bullage et le début de la cristallisation.

Tout l'enjeu pour envisager le développement et l'exploitation future de ces stockages exploitant des MCP sujets à la surfusion, notamment des sucres alcooliques, repose donc sur la possibilité d'améliorer le contrôle de cristallisation. Le document US 2011/146940 A1 montre un système de stockage thermique comme dans le préambule de revendication 1.

### RÉSUMÉ DE L'INVENTION

Pour atteindre cet objectif, un aspect de la présente invention concerne un Système de Stockage Thermique (SST) par Matériau à Changement de Phase (MCP) comprenant une cuve destinée à contenir un MCP, et un système de circulation plongeant dans la cuve, destiné à la circulation d'un fluide caloporteur issu d'un réseau externe de circulation du fluide caloporteur caractérisé en ce qu'il comprend un dispositif de contrôle de la cristallisation du MCP comprenant :
- un module d'injection configuré pour injecter, en partie inférieure de la cuve,dans le MCP, un solvant diphasique à l'état liquide, et
- un module d'évacuation configuré pour évacuer le solvant diphasique à l'état gazeux en partie supérieure de la cuve, opposée à l'extrémité inférieure.

Le système de circulation du fluide caloporteur permet de faire pénétrer à l'intérieur de la cuve et donc au contact indirect du MCP, le fluide caloporteur au travers préférentiellement d'échangeurs thermiques sous forme d'une pluralité de tubes plongeants ou de plaques plongeantes.

Le solvant est diphasique de sorte à changer d'état au contact du MCP ayant emmagasiné de la chaleur.

De cette manière, l'addition de solvant diphasique dans le MCP contribue à modifier favorablement les propriétés du MCP et donc accélérer la vitesse de cristallisation tout en permettant le chauffage du solvant introduit à l'état liquide au contact du MCP. L'augmentation de la température du solvant au contact du MCP entraine son ébullition générant un bullage du solvant dans le MCP déclenchant ainsi la cristallisation du MCP. Un tel bullage génère une agitation conséquente du fait de l'évaporation du solvant et à la différence de la masse volumique entre son état liquide et son état gazeux.

Cette combinaison d'effets permet d'améliorer notablement la vitesse de cristallisation.

L'injection du solvant diphasique permet donc de manière efficace de contrôler la cristallisation du MCP et notamment le déclenchement et la vitesse de cristallisation.

Le solvant à l'état gazeux est évacué par un module d'évacuation pour limiter l'augmentation de la pression dans la cuve et permettre le recyclage du solvant.

Avantageusement, le SST comprend un échangeur thermique configuré à condenser le solvant gazeux évacué de la cuve par le module d'évacuation. L'échangeur thermique est externe à la cuve et permet ainsi de condenser le solvant pour qu'il soit réinjecté à l'état liquide dans la cuve par le module d'injection.

Avantageusement, le solvant est choisi de sorte que le MCP n'y soit pas soluble et de sorte à générer des sites de nucléations pour accélérer la vitesse de cristallisation. De cette manière la quantité de solvant pouvant être introduit dans la cuve au contact du MCP peut être importante sans risquer de dénaturer le MCP et donc générer une forte agitation.

Suivant une variante alternative, le MCP est soluble dans le solvant. Le solvant à l'état liquide est injecté dans des quantités assez faibles, préférentiellement inférieures à 10%, plus préférentiellement inférieures ou égales à 5% de sorte à ne pas dénaturer le MCP et risquer d'empêcher toute cristallisation.

De manière avantageuse, suivant cette variante, le SST comprend un ciel gazeux comprenant au moins un gaz inerte injecté en partie inférieure de la cuve, préférentiellement mélangé au solvant liquide de sorte à pulvériser le solvant en microgouttelettes permettant une bonne dispersion du solvant dans le MCP.

Un autre aspect de la présente invention concerne un procédé de contrôle de la cristallisation d'un MCP contenu dans une cuve d'un SST par l'injection d'un solvant, diphasique, liquide/gaz, dans le MCP contenu dans la cuve, à l'état liquide, en partie inférieure de la cuve et l'évacuation du solvant à l'état gazeux en partie supérieure de la cuve. L'injection d'un solvant dans le MCP va accélérer la vitesse de cristallisation du MCP, de plus le changement d'état du solvant de l'état liquide à l'état gazeux génère une agitation mécanique et un bullage propice au déclenchement de la cristallisation.

Un autre aspect de la présente invention concerne un procédé de stockage et de déstockage d'énergie thermique par un SST tel que décrit ci-dessus comprenant une phase de charge au cours de laquelle un fluide caloporteur cède sa chaleur à un MCP contenu dans une cuve entrainant la fusion du MCP, et une phase de décharge au cours de laquelle le MCP cède sa chaleur au fluide caloporteur entrainant la cristallisation du MCP comprenant l'injection d'un solvant diphasique liquide/gaz à l'état liquide, en partie inférieure de la cuve et l'évacuation du solvant à l'état gazeux en partie supérieure de la cuve.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

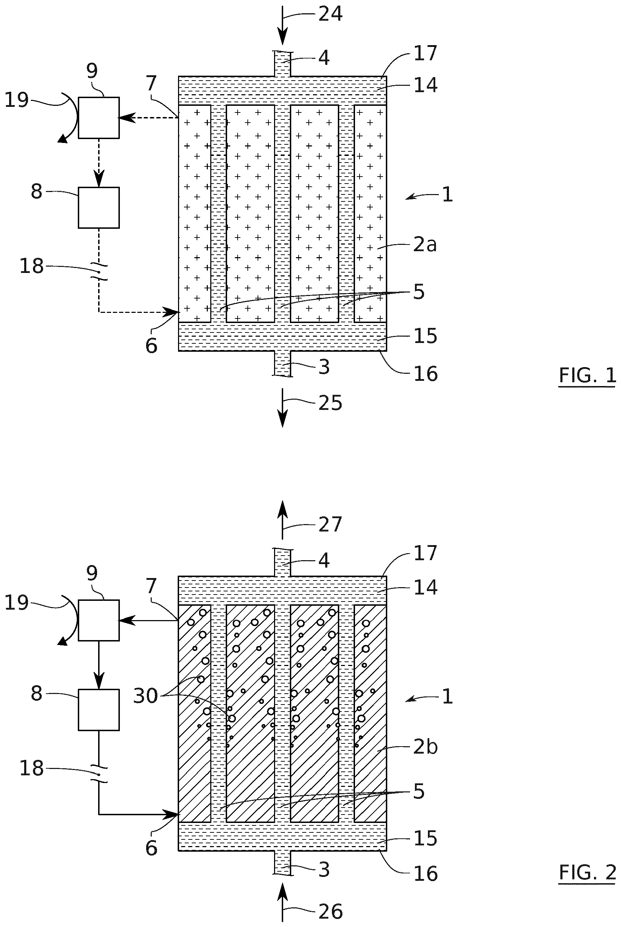

Les FIGURES 1 et 2 sont des schémas représentant un système de stockage thermique, respectivement en charge et en décharge, selon un premier mode de réalisation de l'invention comprenant un échangeur thermique externe solvant/air et une hauteur manométrique du réservoir du solvant liquide.

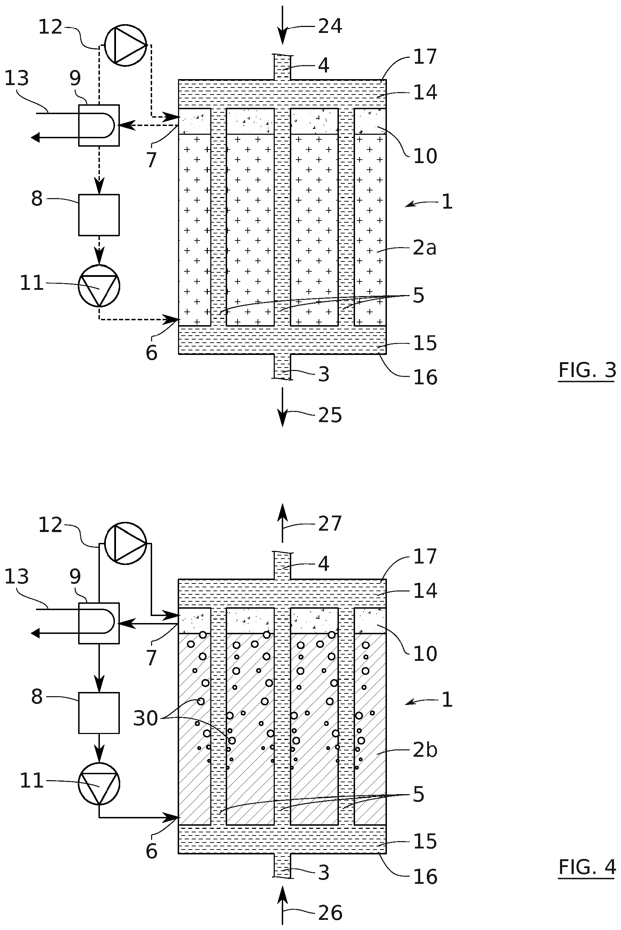

Les FIGURES 3 et 4 sont des schémas représentant un système de stockage thermique, respectivement en charge et en décharge, selon un deuxième mode de réalisation de l'invention comprenant un échangeur thermique externe solvant/fluide réfrigérant, une pompe d'injection du solvant liquide et un système de retour des incondensables du ciel de gaz en partie supérieure de la cuve.

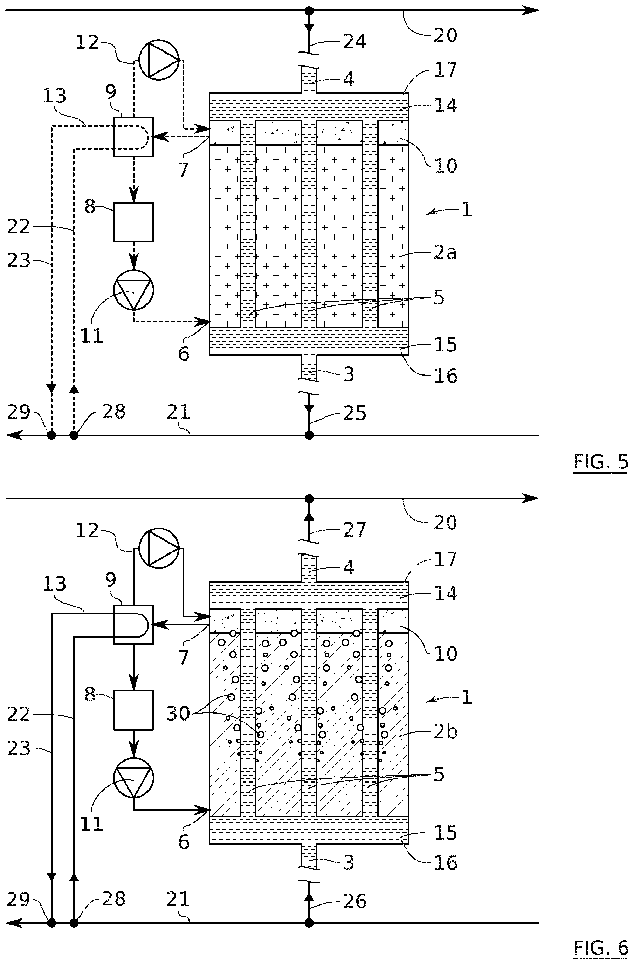

Les FIGURES 5 et 6 sont des schémas représentant un système de stockage thermique, respectivement en charge et en décharge, selon un troisième mode de réalisation de l'invention comprenant un échangeur thermique externe solvant/fluide réfrigérant agencé sur le réseau externe de circulation du fluide caloporteur, une pompe d'injection du solvant liquide et un système de retour des incondensables du ciel de gaz en partie supérieure de la cuve.

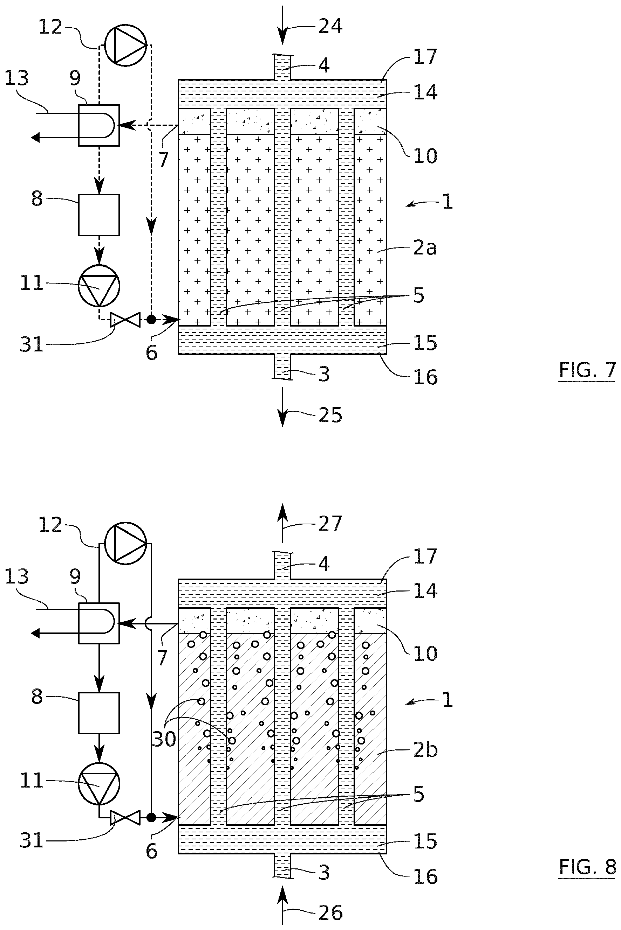

Les FIGURES 7 et 8 sont des schémas représentant un système de stockage thermique, respectivement en charge et en décharge, selon un quatrième mode de réalisation de l'invention comprenant un échangeur thermique externe solvant/fluide réfrigérant, une pompe d'injection du solvant liquide et un système de retour des incondensables du ciel de gaz relié au module d'injection du solvant.

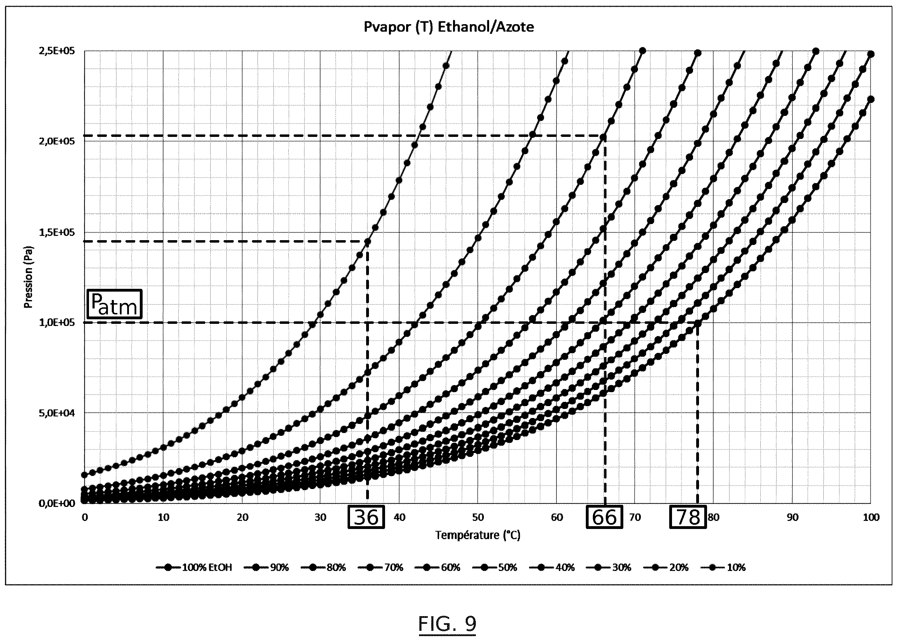

La FIGURE 9 est un diagramme de la pression de vapeur de l'éthanol en fonction de la température et de la fraction d'azote, zoom sur la température T°C [0;100] et la pression P(bar) [0;2,5].

Les dessins sont donnés à titre d'exemple et ne sont pas limitatifs de l'invention. Ils constituent des représentations schématiques de principe destinées à faciliter la compréhension de l'invention et ne sont pas nécessairement à l'échelle des applications pratiques.

Les traits pleins illustrent une connexion fluidique active tandis que les traits en pointillés illustrent une connexion fluidique inactive.

### DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement :
∘ le SST comprend un échangeur thermique externe 9 configurer pour condenser le solvant gazeux évacué de la cuve 1 par le module d'évacuation comprenant avantageusement une valve d'évacuation 7 ;
La présence d'un échangeur thermique permet de condenser le solvant gazeux pour le réinjecter à l'état liquide dans la cuve. L'échangeur thermique 9 est agencé à l'extérieur de la cuve 1.
∘ l'échangeur thermique externe 9 est un condenseur échangeant la chaleur entre le solvant gazeux et l'air ambiant 19 ;
Ce type d'échangeur offre la possibilité de condenser à une faible température ce qui s'avère utile dans des conditions de température ambiante et en été.
∘ l'échangeur thermique externe 9 est un condenseur échangeant la chaleur entre le solvant gazeux et un liquide ;
Ce type d'échangeur permet d'avoir un échangeur compact. ∘ l'échangeur 9 est configuré pour être agencé sur le réseau externe de circulation du fluide caloporteur ;
Cette disposition présente l'avantage de valoriser la chaleur récupérée par le fluide caloporteur au niveau de l'échangeur thermique externe 9.
∘ le SST comprend un ciel gazeux 10 composé d'au moins un gaz inerte et un module de retour des incondensables 12 du ciel gazeux 10 depuis l'échangeur thermique 9 vers la cuve 1 ;
Le ciel de gaz 10 est mis en place au-dessus du MCP 2 pour éviter la perte du MCP par vaporisation et permet d'absorber les variations volumiques du MCP 2 au cours des changements de phase liées aux cycles de charge et de décharge du SST. Le gaz inerte présente l'avantage de ne pas réagir avec le MCP 2 pour éviter notamment son oxydation. Ce gaz inerte est emporté avec le solvant gazeux qui est évacué, mais n'est pas condensable et est donc avantageusement réintroduit dans la cuve 1.
∘ le module de retour des incondensables 12 est connecté au module d'injection du solvant à l'état liquide de sorte à injecter en partie inférieure de la cuve 1 les incondensables du ciel gazeux.
∘ les incondensables 12 du ciel gazeux 10 sont injectés par le module d'injection du solvant seuls ou en mélange avec le solvant à l'état liquide.
∘ le mélange de solvant à l'état liquide et d'incondensables 12 comprend une quantité de solvant égale ou inférieure à 10%, préférentiellement 5%.
∘ le MCP est soluble dans le solvant.

Cette disposition est particulièrement avantageuse lorsque le MCP est soluble dans les solvants. Le solvant est ainsi pulvérisé en combinaison avec les incondensables 12, c'est-à-dire un gaz inerte du ciel gazeux. La pulvérisation du solvant permet sa dispersion à l'état liquide sous forme de microgouttelettes dans le MCP avant son évaporation spontanée lors de son augmentation de température au contact du MCP.
∘ le module de retour des incondensables 12 est connecté à la partie supérieure de la cuve 1 de sorte à injecter les incondensables 12 dans le ciel gazeux 10.
∘ le MCP est insoluble dans le solvant.
Cette disposition est notamment choisie et préférée lorsque le MCP est insoluble dans le solvant ainsi une plus grande quantité de solvant peut être introduit dans le MCp sans risque d'endommager le MCP et il n'est pas nécessaire de pulvériser le solvant dans le MCP pour avoir une bonne dispersion.
∘ le SST comprend un réservoir 8 connecté au module d'injection du solvant et recevant avantageusement le solvant à l'état liquide condensé de l'échangeur externe 9 de sorte à alimenter le module d'injection.
∘ Le module d'injection comprend une colonne d'injection 18 configurée pour être d'une hauteur manométrique adaptée à l'injection du solvant liquide, préférentiellement condensé depuis le réservoir 8, jusque dans la cuve 1 ;
Le solvant, notamment issu de l'échangeur thermique externe 9, est contenu à l'état liquide dans un réservoir 8 en vue de son utilisation ; l'utilisation d'une colonne d'injection du solvant de hauteur manométrique permet une auto-alimentation 12 de la cuve 1 en solvant tout en évitant les reflux lors de l'évaporation du solvant dans la cuve 1.
∘ le SST comprend une pompe d'injection 11 destinée à permettre l'injection du solvant liquide, préférentiellement condensé depuis le réservoir 8, jusque dans la cuve 1 ;
L'utilisation d'une pompe permet de s'affranchir de la problématique de la hauteur manométrique et donc permet une installation plus compacte.
∘ le système de circulation plongeant dans la cuve 1 comprend un faisceau de tubes 5 destiné à plonger dans le MCP 2 et destiné à la circulation du fluide caloporteur.
∘ le MCP 2 est un choisi parmi les MCP sujets à la surfusion.
∘ Le MCP 2 est choisi parmi les MCP ayant un degré de surfusion au moins égal à 2°C, préférentiellement égal à 5°C.
∘ le MCP présente une surfusion correspondant à la différence entre sa température de cristallisation théorique et sa température réelle de cristallisation égale ou supérieure à 2°C.
∘ Le MCP 2 est choisi parmi les MCP organiques tels que les sucres alcooliques, par exemple le xylitol, le mannitol, le sorbitol, l'érythritol, ou leurs mélanges, et les produits dérivés de sucres alcooliques comme l'isosorbide et les produits dérivés de l'isosorbide, ou leurs mélanges ou parmi les MCP inorganiques tels que les hydrates de sels, par exemple tels que l'acétate de sodium tri hydrate.
∘ le solvant possède des propriétés thermiques en adéquation avec l'application et l'effet recherché, préférentiellement, une température d'ébullition inférieure à la température de cristallisation du MCP pour une pression donnée,
∘ le solvant est choisi pour que le MCP n'y soit pas soluble,
∘ Le solvant est de l'éthanol, ou du méthanol ou de l'acétone ;
∘ le solvant est choisi pour que le MCP y soit soluble,
∘ Le solvant est de l'eau ;
∘ Le solvant est choisi pour être un mélange de solvants dans lesquels le MCP est soit miscible, soit non miscible, soit miscible dans certains et non miscible dans d'autres ;
∘ Le solvant est un mélange d'éthanol et d'eau.
∘ le fluide caloporteur est de l'eau notamment pour les applications de stockage de chaleur basses températures, i.e. inférieures à 100°C),
∘ le fluide caloporteur est de l'eau surchauffée pressurisée notamment pour les applications de stockage de chaleur moyennes températures, i.e. supérieures à 100°C,
∘ Le fluide caloporteur est de la vapeur notamment pour les applications de stockage de chaleur hautes températures, i.e. souvent supérieures à 150°C
∘ le fluide caloporteur est une huile thermique, notamment pour les applications de stockage de chaleur hautes températures, i.e. jusqu'à à 300°C.

Avantageusement, le procédé de stockage d'énergie thermique par un SST comprend des caractéristiques optionnelles qui peuvent éventuellement être utilisées en association ou alternativement :
∘ la pression gazeuse dans la cuve 1 est ajustée de sorte à contrôler la température de changement d'état du solvant.
∘ la pression gazeuse est ajustée par contrôle de la perte de charge résultant de l'évacuation par le module d'évacuation grâce à une valve d'évacuation calibrée.
∘ la pression gazeuse est ajustée par contrôle du retour des incondensables dans la cuve 1.
∘ la pression gazeuse est également contrôlée dans le ciel gazeux, et/ou l'échangeur thermique externe, et/ou les connexions fluidiques entre les éléments du SST.
∘ comprenant en phase de charge l'injection d'incondensables du ciel gazeux 10 en partie inférieure de la cuve 1.
∘ comprenant en phase de charge l'injection d'incondensables du ciel gazeux 10 en partie supérieure de la cuve 1.

Pour la suite de la description, on entend par 'haut' et 'bas', ou leurs dérivés, une qualité de positionnement relatif d'un élément du SST 100 lorsque celui-ci est installé de façon fonctionnelle, le 'haut' étant orienté à l'opposé du sol et le 'bas' étant orienté vers le sol. L'extrémité supérieure se situe en haut et l'extrémité inférieure se situe en bas

L'invention concerne un Système de Stockage thermique (SST). Le stockage de l'énergie thermique permet à la chaleur d'être utilisée en différé. La chaleur peut être stockée sous plusieurs formes. L'invention s'attache au stockage sur la forme de chaleur latente avec l'utilisation de matériaux à changement de phase qui emmagasinent l'énergie à mesure qu'ils changent de phase. Lorsque le matériau atteint sa température de changement de phase, il absorbe une quantité de chaleur pour réaliser la transformation, connue sous le nom de chaleur latente de fusion ou de vaporisation selon le cas. A l'inverse, lorsque le matériau liquide ou gaz est refroidi, il retourne à la phase solide ou liquide en restituant sa chaleur latente.

Bien que la chaleur latente de fusion soit plus faible que la chaleur latente d'évaporation, la transition solide-liquide est la plus prometteuse puisqu'elle permet de limiter l'expansion volumique et ainsi l'augmentation de pression due au changement de phase.

Le SST selon l'invention utilise préférentiellement un MCP 2, ou un mélange de MCP, diphasique, solide/liquide.

Le SST selon l'invention comprend une cuve 1 contenant un MCP 2 et un système de circulation d'un fluide caloporteur plongeant dans la cuve 1. Le système de circulation d'un fluide caloporteur forme un échangeur thermique interne à la cuve 1. L'échangeur thermique interne comprend préférentiellement un faisceau 5 de tubes à ailettes assemblé entre un collecteur et un distributeur hydraulique 14-15. La cuve 1 est également dénommée calandre, préférentiellement cylindrique pour des raisons de conception mécanique. En fonctionnement, le fluide caloporteur circule à l'intérieur des tubes et échange sa chaleur avec un MCP 2 contenu dans la cuve 1.

Avantageusement, la cuve 1 s'étend suivant une direction principale verticale. Avantageusement, l'échangeur thermique interne s'étend suivant une direction verticale, le faisceau 5 de tubes s'étend verticalement entre le collecteur et le distributeur 14-15 préférentiellement disposés aux extrémités supérieure et inférieure de la cuve 1. La cuve est une enceinte, c'est-à-dire qu'elle est close à l'exception des ouvertures décrites.

Le SST fonctionne suivant trois phases majeures : la charge, le stockage et la décharge.
- Une phase dite de charge, durant laquelle le fluide caloporteur cède sa chaleur au MCP 2, entrainant la fusion de celui-ci. La température du fluide est alors supérieure à la température de fusion du MCP 2 et son sens de circulation est préférentiellement vertical descendant.
- Une phase, dite de stockage, au cours de laquelle la circulation du fluide caloporteur est arrêtée et le MCP 2 conserve l'énergie thermique stockée, hors considération des déperditions thermiques avec l'extérieur.
- Une phase dite de décharge durant laquelle le fluide caloporteur circule à une température inférieure à la température de solidification du MCP 2, entrainant la cristallisation du matériau et le réchauffement du fluide caloporteur. Le fluide circule préférentiellement dans le sens vertical ascendant.

L'invention s'applique à tous les MCP sujets au phénomène de surfusion. La surfusion est la capacité du MCP à descendre sous le point de cristallisation tout en restant sous forme liquide. Pour l'invention, un MCP est considéré comme sujet à la surfusion à partir d'un degré de surfusion de 2°C, préférentiellement 5°C, ce qui peut alors empêcher la décharge du SST.

Pour l'invention, la surfusion est calculée comme correspondant à la différence entre la température de cristallisation théorique et la température réelle de cristallisation. La température réelle de cristallisation étant inférieure à la température théorique de cristallisation. Des degrés de surfusion beaucoup plus élevés peuvent également être résolus par l'invention, par exemple, le Xylitol peut descendre sans difficulté en surfusion jusqu'à la température ambiante. Compte tenu de sa température de cristallisation considérée entre 93°C et 95°C, le degré de surfusion du Xylitol peut être dans ce cas d'environ 70°C.

Préférentiellement, le MCP est choisi parmi les composés organiques et notamment les sucres alcooliques appartenant à la famille des polyols, préférentiellement le sorbitol, le mannitol, le xylitol, le lactitol, et l'érythritol, ainsi que leurs mélanges ou les produits dérivés de sucres alcooliques comme l'isosorbide et les produits dérivés de l'isosorbide ou leurs mélanges. Des mélanges des composés organiques peuvent être utilisés. Les MCP ci-dessus listés sont extraits des plantes et peuvent être qualifiés de biosourcés.

Les sucres alcooliques possèdent des valeurs d'enthalpie de phase élevées. On relève ainsi une enthalpie de fusion de 344 J/g pour l'érythritol, de 280 J/g pour le xylitol ou encore 341 J/g pour le mannitol. Ils présentent aussi une grande masse volumique de l'ordre de 1500 kg/m3 (par exemple à l'état solide), ce qui conduit à une densité énergétique très élevée. Ce sont par ailleurs des produits peu coûteux et non toxiques.

Préférentiellement, le MCP est choisi parmi les hydrates de sel qui sont des sels inorganiques qui contiennent de l'eau et dont la formule générale est AB.nH2O. Pendant la charge, la déshydratation du sel a lieu. Le produit de cette déshydratation peut être un hydrate de sel avec moins de molécules d'eau selon la formule :

*AB*.n*H*2O→*AB*.m*H*2O+(n-m)*H*2O

; ou bien le même sel sous sa forme anhydre :

*AB*.n*H*2O→*AB*+n*H*2O

Préférentiellement, CaCl₂.6H₂O, Mn(NO₃)2.6H₂O, Al₂(SO₄)3.18H₂0, la bischofite comme exemple d'un mélange d'hydrates de sels composé à 95% massique de MgCl2.6H2O et à 5% massique de KMgCl₃.6H₂O, Li₂SO₄.H₂O et ayant une température de fusion autour de 98.9°C.

A titre d'exemple préféré, l'acétate de sodium tri hydrate, est un sel hydraté ou eutectique pouvant être utilisé comme MCP dans le cadre de l'invention.

De manière caractéristique de l'invention, le SST comprend un dispositif de contrôle de la cristallisation du MCP. Le dispositif de contrôle de la cristallisation comprend un module d'injection d'un solvant à l'état liquide dans la cuve 1. Le module d'injection comprend préférentiellement au moins un injecteur 6, selon une possibilité deux ou plusieurs injecteurs 6 sont prévus pour améliorer la diffusion du solvant dans la cuve 1 et plus précisément dans le MCP 2.

Selon une possibilité, le module d'injection comprend un élément configuré pour l'injection passive du solvant par l'injecteur 6. Selon cette possibilité, le module d'injection comprend une colonne d'injection 18 d'une hauteur manométrique. La hauteur manométrique de la colonne 18 permet une auto-alimentation de la cuve 1 en solvant tout en évitant les reflux lors de l'évaporation du solvant dans la cuve 1. L'alimentation est passive. La hauteur manométrique totale dépend de trois phénomènes physiques principaux :
- la hauteur géométrique totale (différence d'altitude entre l'entrée du liquide et sa sortie à l'atmosphère) ;
- des pertes de charge, elles-mêmes composées des pertes de charge régulières et singulières ;
- de la pression de refoulement à la sortie.

Selon une autre possibilité, le module d'injection comprend un élément configuré pour l'injection active du solvant par l'injecteur 6. Selon cette possibilité, le module d'injection comprend une pompe d'injection 11 du solvant.

Le dispositif de contrôle comprend également un module d'évacuation du solvant à l'état gazeux. Le module d'évacuation comprend préférentiellement au moins une valve d'évacuation 7.

Préférentiellement, le module d'injection est agencé en partie inférieure de la cuve 1, c'est-à-dire dans le tiers inférieur de la cuve 1 plus préférentiellement, le module d'injection est disposé à l'extrémité inférieure de la cuve 1, c'est-à-dire à proximité immédiate du fond 16 de la cuve 1 où se situe notamment le collecteur/distributeur 15 de l'échangeur thermique interne.

Préférentiellement, le module d'évacuation est agencé en partie supérieure de la cuve 1 c'est-à-dire dans le tiers supérieur de la cuve 1 plus préférentiellement, le module d'évacuation est disposé à l'extrémité supérieure de la cuve 1, c'est-à-dire à proximité immédiate du plafond 17 de la cuve 1 où se situe notamment le collecteur/distributeur 14 de l'échangeur thermique interne.

Ces dispositions particulières permettent de prévoir un parcours le plus long possible pour le solvant cheminant dans le MCP 2 contenu dans la cuve 1.

Le solvant utilisé est diphasique entre deux états : liquide/gaz. Il est choisi de sorte à avoir une température d'ébullition dans la gamme d'utilisation du MCP. À titre d'exemple, l'éthanol pur qui présente une température d'ébullition de l'ordre de 78°C à la pression atmosphérique constitue un solvant diphasique particulièrement adapté à l'utilisation du Xylitol, dont la température de cristallisation est proche de 93°C, comme MCP, d'autant que ces deux constituants ne sont pas solubles l'un dans l'autre. Lors de l'ébullition du solvant dans le MCP, les bulles 30 formées créent tout d'abord une agitation mécanique propice à la cristallisation, puisque favorisant l'apparition de premiers cristaux et formant ainsi de nombreux sites de nucléation, conduisant par voie de conséquence à augmenter la probabilité de nucléation spontanée.

Le phénomène de surfusion est alors réduit voir supprimé.

Selon un mode de réalisation, le solvant est avantageusement choisi pour que le MCP y soit non miscible ou encore non soluble. Avantageusement, le solvant est également non miscible ou non soluble dans le MCP. Cette caractéristique permet elle aussi de créer des sites de nucléation accélérant la vitesse de cristallisation.

Le MCP n'étant pas miscible dans le solvant, la quantité de solvant pouvant être introduit dans la cuve 1 est importante.

Or, la vitesse de cristallisation est déterminante pour la puissance du système de stockage. Si le MCP est long à cristalliser, il rendra sa chaleur très lentement et limitera la puissance échangée avec le fluide caloporteur. Ainsi, grâce à l'invention, les performances du SST sont améliorées.

À titre d'exemple préféré, le solvant est choisi parmi l'éthanol, le méthanol, l'acétone.

Suivant un autre mode de réalisation, le solvant est choisi pour que le MCP y soit miscible. À titre d'exemple préféré, le solvant est de l'eau.

Suivant ce mode de réalisation, la quantité de solvant pouvant être introduit dans la cuve est assez faible, inférieure ou égale à 10% préférentiellement à 5%. Avantageusement, le solvant à l'état liquide est injecté en mélange à un gaz inerte et préférentiellement à un gaz inerte formant au moins en partie un ciel gazeux 10 en partie supérieure de la cuve 1.

Le solvant est ainsi pulvérisé à l'état liquide avec le gaz inerte puis passe à l'état liquide. Le gaz inerte est un vecteur pour le solvant.

Suivant encore un autre mode de réalisation, le solvant peut être un mélange d'au deux moins solvants de sorte que soit le MCP est miscible dans tous les solvants choisis, soit le MCP est insoluble dans tous les solvants choisis, soit le MCP est miscible dans certains des solvants choisis et insoluble dans certains des autres solvants choisis. A titre d'exemple, le solvant est un mélange d'eau et d'éthanol.

Selon une possibilité avantageuse de l'invention, le SST comprend un échangeur thermique externe 9 configuré pour condenser le solvant à l'état gazeux issu de la cuve 1 par le module d'évacuation.

L'échangeur thermique externe 9 est relié d'une part au module d'évacuation l'alimentant et d'autre part à un réservoir 8 destiné à contenir le solvant condensé en vue notamment de sa réinjection dans la cuve 1.

L'échangeur thermique 9 peut être un condenseur échangeant la chaleur entre le solvant gazeux et l'air ambiant 19, ou bien un condenseur échangeant la chaleur entre le solvant gazeux et un liquide, préférentiellement un fluide réfrigérant pouvant être le fluide caloporteur 13 circulant dans le système de circulation du fluide caloporteur ou bien un fluide réfrigérant distinct. Dans le premier cas, le condenseur est relié au réseau externe de circulation du fluide caloporteur (20, 21).

Le condenseur solvant gazeux/air ambiant permet de condenser le solvant gazeux en profitant d'une importante différence de températures entre les deux fluides à l'entrée du condenseur, puisque la température de l'air ambiant étant considérée proche de 25°C, la température à l'entrée du condenseur de l'éthanol gazeux utilisé par exemple comme solvant diphasique dans un SST exploitant du Xylitol comme MCP, sera au minium supérieure à 78°C à la pression atmosphérique.

Le condenseur solvant gazeux/fluide réfrigérant doit être configuré pour que la température du fluide réfrigérant soit inférieure à la température de rosée du solvant suivant la fraction de gaz inerte pouvant être entrainée lors de l'évacuation du solvant gazeux par la valve d'évacuation 7. La température de rosée est fixée par la pression interne dans le condenseur côté condensation et par la fraction d'incondensable à la température de condensation. En somme, plus la température de la source froide du condenseur est élevée, plus la pression du mélange gazeux composé des vapeurs du solvant diphasique et du gaz inerte (incondensable) devra être élevée, pour assurer la condensation d'une fraction importante du solvant diphasique.

Suivant un mode de réalisation, lorsque la pression de vapeur saturante est trop élevée, pour limiter les risques de vaporisation, la cuve 1 du SST comprend un ciel gazeux 10, préférentiellement en surpression, pour éviter la perte du MCP 2 par vaporisation.

Le ciel gazeux 10 est avantageusement formé par au moins un gaz inerte tel que notamment l'azote ou de l'argon, étant toutefois plus coûteux, pour éviter les problèmes de compatibilité avec l'air ambiant 19 de certains MCP tels que les sucres alcooliques qui réagissent avec l'oxygène et s'oxydent.

Suivant ce dernier mode de réalisation, il est avantageusement prévu que le SST comprenne un système de retour des incondensables 12 du ciel gazeux 10. En effet, lors de l'évacuation du solvant à l'état gazeux par le module d'évacuation, le ciel gazeux 10 est également évacué. Cependant, le ciel gazeux 10 n'est pas condensable dans les conditions de fonctionnement de l'échangeur thermique externe 9. Le système de retour permet de récupérer le ciel gazeux 10 qui ne condense pas dans le condenseur contrairement au solvant et de le renvoyer dans la cuve 1. Selon une possibilité, le système de retour des incondensables 12 comprend un moyen de soufflerie telle qu'un ventilateur, une soufflante. Préférentiellement, le retour des incondensables 12 comprend un compresseur permettant de réinjecter le ou les gaz sous pression dans la cuve 1.

Selon les modes de réalisation, le retour des incondensables 12 réinjecte le gaz inerte soit en partie supérieure de la cuve 1, notamment lorsque le MCP est insoluble dans le solvant, soit en partie inférieure de la cuve 1, notamment lorsque le MCP soluble dans le solvant. Dans ce dernier cas, le retour des incondensables 12 est connecté au module d'injection du solvant à l'état liquide.

Lors de la condensation dans l'échangeur externe 9, il est important de prendre en considération le fait que le solvant gazeux que l'on souhaite condenser n'est pas pur, mais comprend une certaine proportion de gaz inerte.

La figure 9 donne les courbes de pression de l'éthanol en fonction de la température pour différentes fractions d'azote contenues dans de l'éthanol gazeux.

On peut constater qu'il sera nécessaire de travailler dans le condenseur 9 en pression pour condenser le plus possible d'éthanol. Deux points particuliers sont indiqués :
- Température de condensation de 36°C correspondant à une température d'air ambiant en été ; il sera nécessaire de travailler à une pression de minimum 1,5 bar pour pouvoir condenser une grande partie des vapeurs d'éthanol. Dans ces conditions de Pression et de Température, il restera au minimum 10% en fraction de vapeurs d'éthanol incondensables avec l'azote.
- Température de condensation de 66°C correspondant à une température lors d'un couplage à un Réseau De Chaleur (RDC), il sera nécessaire de travailler à une pression de minimum 2,1 bars pour pouvoir condenser une grande partie des vapeurs d'éthanol. Dans ces conditions de Pression et de Température, il restera au minimum 30% en fraction de vapeurs d'éthanol incondensables avec l'azote.

Le SST comprend avantageusement un réservoir 8 de solvant. Préférentiellement, le dispositif de contrôle de la cristallisation est configuré pour fonctionner en circuit fermé, c'est-à-dire que le solvant est placé à l'état liquide dans le réservoir 8, puis est injecté à l'état liquide dans la cuve 1 par le module d'injection, puis il est évacué à l'état gazeux par le module d'évacuation et condensé par l'échangeur thermique externe 9 avant de retourner à l'état liquide dans le réservoir 8.

Aux figures 1 et 2, le SST selon l'invention comprend une cuve 1 contenant un MCP 2, un système de circulation de fluide caloporteur comprenant un faisceau 5 de tubes de circulation du fluide caloporteur plongeant dans la cuve 1 relié à l'extrémité supérieure par un collecteur/distributeur 14, et à l'extrémité inférieure par un collecteur/distributeur 15 formant respectivement au moins partiellement le plafond 17 de la cuve 1 et le fond 16 de la cuve 1. Le collecteur/distributeur supérieur 14 est relié à une tubulure 4 d'entrée ou de sortie du fluide caloporteur. Le collecteur/distributeur inférieur 15 est relié à une tubulure 3 d'entrée ou de sortie du fluide caloporteur.

Le SST comprend également le dispositif de contrôle de la cristallisation comprenant le module d'injection comprenant l'injecteur 6, agencé en partie inférieure de la cuve 1, alimenté par la colonne d'injection 18 de hauteur manométrique reliée au réservoir 8 de solvant à l'état liquide, et le module d'évacuation comprenant une valve d'évacuation 7, agencée en partie supérieure de la cuve 1, alimentant le condenseur 9 de solvant échangeant avec l'air ambiant 19 pour alimenter le réservoir 8 en solvant condensé à l'état liquide.

Le mode de réalisation illustré aux figures 1 et 2 est avantageusement utilisé avec un MCP insoluble dans le solvant.

La figure 1 illustre la phase de charge dans laquelle le SST charge l'énergie thermique apportée par le fluide caloporteur. Dans cette phase, le fluide caloporteur circule de haut en bas dans le système de circulation du fluide caloporteur. Le fluide caloporteur pénètre à une première température 24 dans le distributeur 14 à partir de la tubulure d'entrée 4 qui distribue le fluide au faisceau de tubes 5 plongeant dans le MCP 2 de la cuve 1. En cheminant dans le faisceau de tubes 5 en contact avec le MCP 2, le fluide caloporteur cède de la chaleur au MCP. Le fluide caloporteur ressort de faisceau de tubes 5 par le collecteur 15 puis est évacué de la cuve 1 par la tubulure de sortie 3. Le fluide ressort à une deuxième température 25 plus faible que la première température. Le MCP 2 qui récupère l'énergie thermique du fluide caloporteur va augmenter en température jusqu'à changer d'état. Classiquement, le MCP 2 passe de l'état solide à l'état liquide lors de la phase de charge.

Pendant cette phase de charge, le changement d'état du MCP ne nécessite pas de contrôle de la cristallisation. De préférence, l'injection de solvant est réduite, voire nulle. Dans ce cas-là, la hauteur manométrique est configurée pour que l'injection du solvant soit réduite ou arrêtée.

La figure 2 illustre la phase de décharge dans laquelle le SST décharge l'énergie thermique stockée au profit du fluide caloporteur. Dans cette phase, le fluide caloporteur circule de bas en haut dans le système de circulation du fluide caloporteur. Le fluide caloporteur pénètre à une première température 26 dans le distributeur 15 à partir de la tubulure d'entrée 3 qui distribue le fluide au faisceau de tubes 5 plongeant dans le MCP 2 de la cuve 1. En cheminant dans le faisceau de tubes 5 en contact avec le MCP 2, le MCP cède de la chaleur au fluide caloporteur. Le fluide caloporteur ressort de faisceau de tubes 5 par le collecteur 14 puis est évacué de la cuve 1 par la tubulure de sortie 4. Le fluide ressort à une deuxième température 27 plus élevée que la première température. Le MCP 2 qui cède l'énergie thermique au fluide caloporteur va diminuer en température jusqu'à changer d'état. Classiquement, le MCP 2 passe de l'état liquide à l'état solide lors de la phase de décharge.

Pendant cette phase de décharge, le changement d'état du MCP 2 se fait par cristallisation et nécessite typiquement un contrôle pour éviter les risques de surfusion notamment. Le solvant à l'état liquide est donc injecté dans la cuve 1 par l'injecteur 6 directement au contact du MCP 2. Dans ce cas-là, la hauteur manométrique est configurée pour que l'injection du solvant soit réalisée selon un débit prédéfini. Le solvant à l'état liquide va augmenter en température au contact du MCP 2 présentant une température plus élevée, en augmentant en température le solvant va cheminer dans le MCP 2 en direction de l'extrémité supérieure de la cuve 1. Le solvant va atteindre sa température d'ébullition et passer à l'état gazeux. Le passage à l'état gazeux se fait avec la formation de bulles 30 dans le MCP 2 qui favorisent la formation de cristaux (sites de nucléations) propices à la propagation de la cristallisation du MCP dans le reste de la cuve.

Le déplacement du solvant d'abord à l'état liquide puis à l'état gazeux contribue à modifier la viscosité du MCP2, à générer une agitation mécanique au cœur du MCP 2 favorisant la cristallisation et donc permettant d'accélérer la vitesse de cristallisation.

Le solvant à l'état gazeux se retrouve à l'extrémité supérieure de la cuve 1 où il est évacué par une valve d'évacuation 7. Préférentiellement, la valve d'évacuation 7 peut être une vanne régulée ou un clapet d'évacuation taré pour une faible pression puisque la vapeur est une vapeur de solvant pur. La pression correspond à la pression de vapeur saturante du solvant. La valve d'évacuation 7 alimente le condenseur 9 en solvant à l'état gazeux. L'échange thermique entre le solvant à l'état gazeux et l'air ambiant 19 permet de condenser le solvant qui est amené au réservoir 8 avant d'être à nouveau injecté dans la cuve 1.

Selon un mode de réalisation avantageux de l'invention, la température de changement d'état liquide/vapeur du solvant diphasique peut être modulée en contrôlant la pression gazeuse dans la cuve du SST contenant le MCP 2 et plus précisément dans le ciel de gaz 10, dans la partie gazeuse de l'échangeur thermique externe 9, ainsi que dans toutes les liaisons reliant ces équipements. Cette pression peut être ajustée :
- soit en contrôlant la perte de charge due à l'évacuation ou sortie gazeuse effectuée par le module d'évacuation, par exemple en utilisant un orifice calibré ou une vanne de réglage,
- soit en contrôlant la fraction d'incondensable, par exemple du gaz inerte, dans l'échangeur thermique externe 9, qui retourne au ciel de gaz 10 par le retour d'incondensables 12.

Aux figures 3 et 4, le SST selon l'invention comprend une cuve 1 contenant un MCP 2, un système de circulation de fluide caloporteur comprenant un faisceau 5 de tubes de circulation du fluide caloporteur plongeant dans la cuve 1 relié à l'extrémité supérieure par un collecteur/distributeur 14, et à l'extrémité inférieure par un collecteur/distributeur 15 formant respectivement au moins partiellement le plafond 17 de la cuve 1 et le fond 16 de la cuve 1. Le collecteur /distributeur supérieur 14 est relié à une tubulure 4 d'entrée ou de sortie du fluide caloporteur. Le collecteur/distributeur inférieur 15 est relié à une tubulure 3 d'entrée ou de sortie du fluide caloporteur.

Le mode de réalisation illustré aux figures 3 et 4 est avantageusement utilisé avec un MCP insoluble dans le solvant.

Un ciel de gaz 10 est aménagé au-dessus du MCP 2 en partie supérieure de la cuve 1. Préférentiellement, le ciel de gaz 10 comprend un gaz, ou un mélange, de gaz inerte tel que l'azote. Bien que plus pénalisant pour la condensation compte tenu de la gestion des incondensables, l'utilisation d'un mélange gazeux intégrant un gaz inerte tel que l'azote peut être avantageusement justifié pour réduire les considérations de sécurité liées à l'utilisation d'un solvant diphasique inflammable ou explosif (notamment aux contraintes de devoir concevoir un équipement conforme à la réglementation ATEX). En cas de fuite, un solvant considéré comme particulièrement dangereux car inflammable ou explosif à l'état gazeux, l'est beaucoup moins s'il est mélangé avec un gaz inerte.

Le SST comprend également le dispositif de contrôle de la cristallisation comprenant le module d'injection comprenant l'injecteur 6, agencé en partie inférieure de la cuve 1, alimenté par une pompe d'injection 11 reliée au réservoir 8 de solvant à l'état liquide, et le module d'évacuation comprenant une valve d'évacuation 7, agencé en partie supérieure de la cuve 1, alimentant le condenseur 9 de solvant échangeant avec un fluide réfrigérant, pour alimenter le réservoir 8 en solvant condensé à l'état liquide.

Le SST comprend un système 12 de retour des incondensables du ciel gazeux 10. Ce système récupère les gaz incondensables dans le condenseur. Ces gaz incondensables correspondent en majorité aux gaz du ciel gazeux 10. Le système 12 de retour des incondensables permet de réinjecter le ou les gaz du ciel gazeux 10 dans la cuve 1.

La figure 3 illustre la phase de charge dans laquelle le SST charge l'énergie thermique apportée par le fluide caloporteur. Dans cette phase, le fluide caloporteur circule de haut en bas dans le système de circulation du fluide caloporteur. Le fluide caloporteur pénètre à une première température 24 dans le distributeur 14 à partir de la tubulure d'entrée 4 qui distribue le fluide au faisceau de tubes 5 plongeant dans le MCP 2 de la cuve 1. En cheminant dans le faisceau de tubes 5 en contact avec le MCP 2, le fluide caloporteur cède de la chaleur au MCP. Le fluide caloporteur ressort de faisceau de tubes 5 par le collecteur 15 puis est évacué de la cuve 1 par la tubulure de sortie 3. Le fluide ressort à une deuxième température 25 plus faible que la première température. Le MCP qui récupère l'énergie thermique du fluide caloporteur va augmenter en température jusqu'à changer d'état. Classiquement, le MCP 2 passe de l'état solide à l'état liquide lors de la phase de charge.

Pendant cette phase de charge, le changement d'état du MCP 2 ne nécessite pas de contrôle de la cristallisation. De préférence, l'injection de solvant est réduite, voire nulle. Dans ce cas-là, la pompe d'injection 11 est configurée pour que l'injection du solvant soit réduite ou arrêtée. Dans ce cas, il peut être prévu un débit très faible de sorte à éviter tout risque de reflux et de cristallisation du MCP 2 au niveau de l'injecteur 6.

La figure 4 illustre la phase de décharge dans laquelle le SST décharge l'énergie thermique stockée au profit du fluide caloporteur. Dans cette phase, le fluide caloporteur circule de bas en haut dans le système de circulation du fluide caloporteur. Le fluide caloporteur pénètre à une première température 26 dans le distributeur 15 à partir de la tubulure d'entrée 3 qui distribue le fluide au faisceau de tubes 5 plongeant dans le MCP 2 de la cuve 1. En cheminant dans le faisceau de tubes 5 en contact avec le MCP 2, le MCP cède de la chaleur au fluide caloporteur. Le fluide caloporteur ressort de faisceau de tubes 5 par le collecteur 14 puis est évacué de la cuve 1 par la tubulure de sortie 4. Le fluide ressort à une deuxième température 27 plus élevée que la première température. Le MCP qui cède l'énergie thermique au fluide caloporteur va diminuer en température jusqu'à changer d'état. Classiquement, le MCP passe de l'état liquide à l'état solide lors de la phase de décharge.

Pendant cette phase de décharge, le changement d'état du MCP se fait par cristallisation et nécessite typiquement un contrôle pour éviter les risques de surfusion notamment. Le solvant à l'état liquide est donc injecté dans la cuve 1 par l'injecteur 6 directement au contact du MCP 1. Dans ce cas-là, la pompe d'injection 11 est configurée pour que l'injection du solvant soit réalisée selon un débit prédéfini. Le solvant à l'état liquide va augmenter en température au contact du MCP 2 présentant une température plus élevée en augmentant en température le solvant qui va cheminer dans le MCP 2 en direction de l'extrémité supérieure de la cuve 1 et se mélanger au ciel gazeux 10. Le solvant va atteindre sa température d'ébullition et passer à l'état gazeux. Le passage à l'état gazeux se fait avec la formation de bulles 30 dans le MCP 2 qui constituent des sites de nucléations propices à la cristallisation du MCP permettant le déclenchement de celle-ci.

Le déplacement du solvant d'abord à l'état liquide puis à l'état gazeux contribue à modifier la viscosité du MCP, à générer une agitation mécanique au cœur du MCP favorisant la cristallisation et donc permettant d'accélérer la vitesse de cristallisation.

Le solvant à l'état gazeux se retrouve à l'extrémité supérieure de la cuve 1 mélangé au ciel gazeux 10. Le mélange du solvant gazeux et du ciel de gaz 10 est évacué par une valve d'évacuation 7. Préférentiellement, la valve d'évacuation 7 est tarée pour une pression adaptée au mélange de gaz à évacuer. La pression correspond à la pression de vapeur saturante du solvant contenant une fraction de gaz inerte. La valve d'évacuation 7 alimente le condenseur 9 en solvant à l'état gazeux. L'échange thermique entre le solvant à l'état gazeux et un fluide réfrigérant permet de condenser le solvant qui est amené au réservoir 8 avant d'être à nouveau injecté dans la cuve 1. Concernant le MCP, le fait d'injecter en continu le solvant lors de la décharge, même lorsque le SST est à une température plus basse que la température d'ébullition du solvant diphasique, ne pose pas de problème, car la cristallisation est déjà amorcée et elle sera entretenue par les nucléus déjà formés.

Aux figures 5 et 6, le SST selon l'invention reprend les éléments structurels du mode de réalisation décrit en référence aux figures 3 et 4. Dans le présent mode de réalisation, le condenseur 9 fonctionne en échangeur entre le solvant gazeux et un fluide réfrigérant, le fluide réfrigérant étant identique au fluide caloporteur circulant dans le système de circulation du fluide caloporteur dans la cuve 1. De ce fait, le condenseur 9 est agencé sur le réseau externe de circulation du fluide caloporteur.

Le mode de réalisation illustré aux figures 5 et 6 est avantageusement utilisé avec un MCP insoluble dans le solvant.

La figure 5 illustre la phase de charge dans laquelle le SST charge l'énergie thermique apportée par le fluide caloporteur. Cette phase se déroule comme décrite en référence à la figure 3. Selon une possibilité, durant cette phase le condenseur fonctionne pour assurer la condensation des éventuelles quantités de solvant piégées dans le MCP 2, à l'état liquide ou gazeux, à la suite de la précédente décharge. L'injection du solvant lors de la décharge, même lorsque le MCP est à une température plus basse que la température d'ébullition du solvant diphasique, ne pose pas de problème, car la cristallisation sera déjà amorcée et elle sera entretenue par les nucléus déjà formés. La décharge valorise la chaleur à une température plus basse que la température d'ébullition du solvant diphasique, la part de celui-ci injecté dans la cuve se retrouvera piégée à l'état liquide à l'intérieur du MCP 2. La charge suivante permettra donc de l'évaporer puis de le condenser hors de la cuve pour le stocker en vue de la décharge suivante. Le fluide caloporteur pénétrant dans la cuve 1 par la tubulure d'entrée 4 provient du départ réseau de fluide caloporteur 20 c'est-à-dire à une première température 24, par exemple 110°C. Le fluide caloporteur sortant de la cuve 1 par la tubulure de sortie 3 rejoint le retour réseau de fluide caloporteur 21, c'est-à-dire à une deuxième température 25, par exemple 65°C.

La figure 6 illustre la phase de décharge dans laquelle le SST décharge l'énergie thermique stockée au profit du fluide caloporteur. Cette phase se déroule comme décrite en référence à la figure 4.

Le fluide caloporteur pénétrant dans la cuve 1 par la tubulure d'entrée 3 provient du retour réseau de fluide caloporteur 21, c'est-à-dire à une première température 26, par exemple 65°C. Le fluide caloporteur sortant de la cuve 1 par la tubulure de sortie 4 rejoint le départ réseau de fluide caloporteur 20, c'est-à-dire à une deuxième température 27, par exemple 110°C.

Le fluide caloporteur du condenseur 9 est issu du réseau externe de circulation du fluide caloporteur, c'est-à-dire que le fluide caloporteur pénétrant dans le condenseur 9 est prélevé à un point de prélèvement 28 sur le retour réseau du fluide caloporteur 21, et présente une première température 22 préférentiellement équivalente à la température 26. Le fluide caloporteur ayant récupéré la chaleur du solvant gazeux dans le condenseur 9 est à une deuxième température 23 supérieure à la première température 22 et est renvoyé, préférentiellement en un point de rejet 29 en aval du point de prélèvement, dans le retour réseau de fluide caloporteur 21 de sorte à permettre un préchauffage de celui-ci. Cette disposition permet de valoriser l'énergie thermique emmagasinée par le solvant lors de son changement d'état vers l'état gazeux en la réinjectant dans le réseau.

Aux figures 7 et 8, le SST selon l'invention reprend les éléments structurels du mode de réalisation décrit en référence aux figures 3 et 4. Dans ce quatrième mode de réalisation, le système de retour des incondensables 12 est disposé de sorte à réinjecter les incondensables du ciel gazeux 10 en partie inférieure de la cuve1 et plus précisément par le module d'injection du solvant.

Ce mode de réalisation est particulièrement avantageux lorsque le MCP est miscible dans le solvant de sorte que la nécessité de limiter la quantité de solvant injecté soit compenser par l'injection combinée de gaz notamment du gaz incondensables du ciel gazeux 10 qui permet alors une bonne dispersion du solvant liquide sous forme de microgouttelettes dans le MCP.

En figure 7 et 8, le système de retour des incondensables 12 est connecté au module d'injection du solvant, avantageusement en amont de l'injecteur 6 de sorte à que les incondensables soient injectés par l'injecteur 6.

Le module d'injection comprend préférentiellement une vanne 31 disposée entre le réservoir 8 et l'injecteur 6 permettant de contrôler la quantité de solvant injecté. Le retour des incondensables 12 est connecté en aval de cette vanne 31.

En figure 7, en phase de charge, le MCP voit sa température augmenter par l'apport d'énergie thermique du fluide caloporteur. Le MCP passe de l'état solide à l'état liquide. Ce changement d'état peut libérer du solvant qui avait été enchâssé lors de l'étape de décharge précédente soit à l'état liquide soit à l'éta gazeux. Le solvant libéré passe à l'état gazeux et remonte dans le ciel de gaz 10. L'augmentation de la pression dans le ciel de gaz 10 entraine l'évacuation par la valve d'évacuation 7 de celui-ci et du solvant à l'état gazeux libéré. Le solvant est condensé dans l'échangeur 9 et le ou les gaz du ciel gazeux 10 est asséché et peut être réinjecté dans la cuve 1 notamment par l'injecteur 6. La vanne d'injection de solvant 31 est quant à elle avantageusement fermée empêchant l'injection de solvant lors de cette phase de charge.

En figure 8, en phase de décharge, le MCP voit sa température diminuer. Le MCP passe de l'état liquide à l'état solide par cristallisation. Le solvant à l'état liquide est injecté par l'injecteur 6. L'augmentation de la pression dans le ciel de gaz 10 entraine l'évacuation par la valve d'évacuation de celui-ci et du solvant à l'état gazeux. Le solvant est condensé dans l'échangeur 9 et le ou les gaz du ciel gazeux 10 est asséché et peut être réinjecté dans la cuve 1 notamment par l'injecteur 6. Le gaz du ciel gazeux est pressurisé avantageusement par un compresseur puis est réinjecté dans la cuve 1 combiné avec le solvant liquide par l'injecteur 6 en partie inférieure de la cuve 1.

À titre d'exemple, non limitatif, un SST selon l'invention contient dans sa cuve 1 60 kg de Xylitol utilisé comme MCP, qui échange sa chaleur avec de l'eau pressurisée surchauffée, utilisée comme fluide caloporteur, dont la température d'entrée est de 115°C à la charge et de 65°C à la décharge.

Dans cette configuration ce SST est capable de restituer environ 10 kWh d'énergie thermique, suivant la durée de stockage et la qualité de l'isolation thermique. Le SST comprend un réservoir contenant environ 0.3 à 1 litre de solvant diphasique, formant un système d'amorçage. Le solvant est injecté à un débit liquide de 86 mm3/s, pour favoriser efficacement la cristallisation du Xylitol et en augmenter sa vitesse.

L'invention n'est pas limitée aux modes de réalisations précédemment décrits et s'étend à tous les modes de réalisation couverts par les revendications.

### REFERENCES

- 1.: Cuve
- 2.: MCP
2.a MCP solide
2.b MCP liquide
- 3.: Tubulure de circulation d'entrée ou de sortie du fluide caloporteur
- 4.: Tubulure de circulation d'entrée ou de sortie du fluide caloporteur
- 5.: Faisceau de tubes plongeant dans le MCP
- 6.: Injecteur
- 7.: Valve d'évacuation
- 8.: Réservoir
- 9.: Echangeur thermique externe
- 10.: Ciel de gaz
- 11.: Pompe d'injection
- 12.: Retour des incondensables
- 13.: Circulation fluide caloporteur dans l'échangeur thermique
- 14.: Collecteur/distributeur supérieur
- 15.: Collecteur/distributeur inférieur
- 16.: Fond de cuve
- 17.: Plafond de cuve
- 18.: Colonne d'injection
- 19.: Air ambiant
- 20.: Départ réseau de fluide caloporteur
- 21.: Retour réseau de fluide caloporteur
- 22.: fluide caloporteur à une première température
- 23.: fluide caloporteur à une deuxième température supérieure à la température 22
- 24.: Fluide caloporteur à une première température
- 25.: Fluide caloporteur à une deuxième température inférieure à la température 24
- 26.: Fluide caloporteur à une première température
- 27.: Fluide caloporteur à une deuxième température supérieure à la température 26
- 28.: Point de prélèvement
- 29.: Point de rejet
- 30.: Bulles
- 31.: Vanne

## Revendications

1. Système de Stockage Thermique (SST) par Matériau à Changement de Phase (MCP) (2) comprenant :
- une cuve (1) destinée à contenir un Matériau à Changement de Phase (MCP) (2),
- un système de circulation plongeant dans la cuve (1), destiné à la circulation d'un fluide caloporteur issu d'un réseau externe de circulation du fluide caloporteur (20,21)
**caractérisé en ce qu'**il comprend un dispositif de contrôle de la cristallisation du Matériau à Changement de Phase (MCP) (2) comprenant :
- un module d'injection configuré pour injecter, en partie inférieure de la cuve (1), dans le Matériau à Changement de Phase (MCP) (2), un solvant diphasique, à l'état liquide,
- un module d'évacuation configuré pour évacuer le solvant diphasique à l'état gazeux en partie supérieure de la cuve (1), opposée à la partie inférieure.

2. Système de Stockage Thermique (SST) selon la revendication 1 comprenant un Matériau à Changement de Phase (MCP) sujet à la surfusion.

3. Système de Stockage Thermique (SST) selon la revendication précédente dans lequel le Matériau à Changement de Phase (MCP) présente une surfusion correspondant à la différence entre sa température de cristallisation théorique et sa température réelle de cristallisation égale ou supérieure à 2°C.

4. Système de Stockage Thermique (SST) selon l'une quelconque des revendications précédentes comprenant un échangeur thermique externe (9) configuré pour condenser le solvant gazeux évacué de la cuve (1) par le module d'évacuation, l'échangeur thermique externe (9) étant un condenseur échangeant la chaleur entre le solvant gazeux et l'air ambiant (19) ou entre le solvant gazeux et un liquide.

5. Système de Stockage Thermique (SST) selon l'une quelconque des revendications précédentes comprenant un ciel gazeux (10) composé d'au moins un gaz inerte et un module de retour des incondensables (12) du ciel gazeux (10) depuis l'échangeur thermique externe (9) vers la cuve (1).

6. Système de Stockage Thermique (SST) selon la revendication précédente dans lequel le module de retour des incondensables (12) est connecté au module d'injection du solvant à l'état liquide de sorte à injecter en partie inférieure de la cuve (1) les incondensables (12) du ciel gazeux (10) seul ou en mélange avec le solvant à l'état liquide, le mélange de solvant à l'état liquide et d'incondensables (12) comprenant une quantité de solvant inférieure ou égale à 5% de la quantité total du mélange.

7. Système de Stockage Thermique (SST) selon la revendication précédente dans lequel le Matériau à Changement de Phase (MCP) est soluble dans le solvant.

8. Système de Stockage Thermique (SST) selon la revendication 5 dans lequel le module de retour des incondensables (12) est connecté à la partie supérieure de la cuve (1) de sorte à injecter les incondensables dans le ciel gazeux (10), le Matériau à Changement de Phase (MCP) est insoluble dans le solvant.

9. Système de Stockage Thermique (SST) selon l'une quelconque des revendications précédentes dans lequel le module d'injection comprend une colonne d'injection (18) configurée pour être d'une hauteur manométrique adaptée à l'injection du solvant à l'état liquide dans la cuve (1) ou une pompe d'injection (11) destinée à permettre l'injection du solvant dans la cuve (1).

10. Système de Stockage Thermique (SST) selon l'une quelconque des revendications précédentes comprenant un réservoir (8) connecté au module d'injection du solvant et configuré pour recevoir le solvant à l'état liquide et alimenter le module d'injection.

11. Système de Stockage Thermique (SST) selon l'une quelconque des revendications précédentes dans lequel le système de circulation plongeant dans la cuve (1) comprend un faisceau de tubes (5) destiné à plonger dans le Matériau à Changement de Phase (MCP) (2) et destiné à la circulation du fluide caloporteur.

12. Système de Stockage Thermique (SST) selon l'une quelconque des revendications précédentes dans lequel le Matériau à Changement de Phase (MCP) (2) est choisi parmi les sucres alcooliques, les produits dérivés de sucres alcooliques et les hydrates de sels, avantageusement le Matériau à Changement de Phase (MCP) (2) est choisi parmi le Xylitol, le sorbitol, le mannitol, l'érythritol, l'isosorbide et les produits dérivés de l'isosorbide, ainsi que leurs mélanges.

13. Système de Stockage Thermique (SST) selon l'une quelconque des revendications précédentes dans lequel le solvant est de l'éthanol.

14. Procédé de contrôle de la cristallisation d'un Matériau à Changement de Phase (MCP) (2) contenu dans une cuve (1) d'un Système de Stockage Thermique (SST) selon l'une quelconque des revendications précédentes **caractérisé en ce qu'**il comprend l'injection dans le Matériau à Changement de Phase (MCP) contenu dans la cuve d'un solvant diphasique, à l'état liquide, en partie inférieure de la cuve (1) et l'évacuation du solvant à l'état gazeux en partie supérieure de la cuve (1).

15. Procédé de stockage d'énergie thermique par un Système de Stockage Thermique (SST) selon l'une quelconque des revendications 1 à 13 **caractérisé en ce qu'**il comprend :
- une phase de charge au cours de laquelle un fluide caloporteur cède sa chaleur à un Matériau à Changement de Phase (MCP) (2) contenu dans une cuve (1) entrainant la fusion du Matériau à Changement de Phase (MCP) (2),
- une phase de décharge au cours de laquelle le Matériau à Changement de Phase (MCP) (2) cède sa chaleur au fluide caloporteur entrainant la cristallisation du Matériau à Changement de Phase (MCP) et comprenant l'injection dans le Matériau à Changement de Phase (MCP) d'un solvant, diphasique, à l'état liquide, en partie inférieure de la cuve (1) et l'évacuation du solvant, à l'état gazeux, en partie supérieure de la cuve (1).

16. Procédé selon la revendication précédente comprenant la condensation du solvant gazeux évacué de la cuve (1) par un échangeur thermique externe (9).

17. Procédé selon l'une quelconque des deux revendications précédentes dans lequel la pression gazeuse dans la cuve (1) est ajustée de sorte à contrôler la température de changement d'état du solvant.

## Patentansprüche

1. System zur Wärmespeicherung (WSS) mittels Phasenwechselmaterial (PCM) (2), umfassend:
- einen Behälter (1), der dazu bestimmt ist, ein Phasenwechselmaterial (PCM) (2) zu enthalten,
- ein in den Behälter (1) eintauchendes Umwälzsystem, das zur Umwälzung eines Wärmeträgerfluids bestimmt ist, welches aus einem externen Umwälznetz des Wärmeträgerfluids (20, 21) stammt,
**dadurch gekennzeichnet, dass** es eine Vorrichtung zur Steuerung der Kristallisation des Phasenwechselmaterials (PCM) (2) umfasst, welche umfasst:
- ein Einspritzmodul, das so konfiguriert ist, dass es im unteren Teil des Behälters (1) ein zweiphasiges Lösungsmittel im flüssigen Zustand in das Phasenwechselmaterial (PCM) (2) einspritzt,
- ein Ausleitmodul, das so konfiguriert ist, dass es das zweiphasige Lösungsmittel im gasförmigen Zustand im dem unteren Teil gegenüberliegenden oberen Teil des Behälters (1) ausleitet.

2. Wärmespeichersystem (WSS) nach Anspruch 1, das ein Phasenwechselmaterial (PCM) umfasst, welches der Unterkühlung unterliegt.

3. Wärmespeichersystem (WSS) nach dem vorstehenden Anspruch, wobei das Phasenwechselmaterial (PCM) eine Unterkühlung aufweist, die der Differenz zwischen seiner theoretischen Kristallisationstemperatur und seiner realen Kristallisationstemperatur von gleich oder größer als 2 °C aufweist.

4. Wärmespeichersystem (WSS) nach einem der vorstehenden Ansprüche, das einen externen Wärmetauscher (9) umfasst, der so konfiguriert ist, dass er das vom Ausleitmodul aus dem Behälter (1) ausgeleitete gasförmige Lösungsmittel kondensiert, wobei es sich bei dem externen Wärmetauscher (9) um einen Kondensator handelt, der die Wärme zwischen dem gasförmigen Lösungsmittel und der Umgebungsluft (19) oder zwischen dem gasförmigen Lösungsmittel und einer Flüssigkeit tauscht.

5. Wärmespeichersystem (WSS) nach einem der vorstehenden Ansprüche, das ein aus mindestens einem Inertgas bestehendes Gaspolster (10) und ein Modul zum Rückführen der nicht kondensierbaren Anteile (12) des Gaspolsters (10) vom externen Wärmetauscher (9) zum Behälter (1) umfasst.

6. Wärmespeichersystem (WSS) nach dem vorstehenden Anspruch, wobei das Modul zum Rückführen der nicht kondensierbaren Anteile (12) mit dem Modul zum Einspritzen des Lösungsmittels im flüssigen Zustand verbunden ist, um die nicht kondensierbaren Anteile (12) des Gaspolsters (10) alleine oder in Mischung mit dem Lösungsmittel im flüssigen Zustand im unteren Teil des Behälters (1) einzuspritzen, wobei die Mischung aus Lösungsmittel im flüssigen Zustand und nicht kondensierbaren Anteilen (12) eine Lösungsmittelmenge von kleiner als oder gleich 5 % der Gesamtmenge der Mischung umfasst.

7. Wärmespeichersystem (WSS) nach dem vorstehenden Anspruch, wobei das Phasenwechselmaterial (PCM) im Lösungsmittel löslich ist.

8. Wärmespeichersystem (WSS) nach Anspruch 5, wobei das Modul zum Rückführen der nicht kondensierbaren Anteile (12) mit dem oberen Teil des Behälters (1) verbunden ist, um die nicht kondensierbaren Anteile in das Gaspolster (10) einzuspritzen, wobei das Phasenwechselmaterial (PCM) nicht im Lösungsmittel löslich ist.

9. Wärmespeichersystem (WSS) nach einem der vorstehenden Ansprüche, wobei das Einspritzmodul eine Einspritzsäule (18), die so konfiguriert ist, dass sie von einer Förderhöhe ist, die für das Einspritzen des Lösungsmittels im flüssigen Zustand in den Behälter (1) geeignet ist, oder eine Einspritzpumpe (11) umfasst, die dazu bestimmt ist, das Einspritzen des Lösungsmittels in den Behälter (1) zu ermöglichen.

10. Wärmespeichersystem (WSS) nach einem der vorstehenden Ansprüche, das einen Tank (8) umfasst, der mit dem Modul zum Einspritzen des Lösungsmittels verbunden und so konfiguriert ist, dass er das Lösungsmittel um flüssigen Zustand aufnimmt und das Einspritzmodul speist.

11. Wärmespeichersystem (WSS) nach einem der vorstehenden Ansprüche, wobei das in den Behälter (1) eintauchende Umwälzsystem ein Rohrbündel (5) umfasst, das dazu bestimmt ist, in das Phasenwechselmaterial (PCM) (2) einzutauchen, und das zur Umwälzung des Wärmeträgerfluids bestimmt ist.

12. Wärmespeichersystem (WSS) nach einem der vorstehenden Ansprüche, wobei das Phasenwechselmaterial (PCM) (2) ausgewählt ist aus den alkoholischen Zuckern, den Derivatprodukten von alkoholischen Zuckern und den Salzhydraten, wobei das Phasenwechselmaterial (PCM) (2) vorteilhafterweise ausgewählt ist aus Xylit, Sorbit, Mannit, Erythrit, Isosorbid und den Derivatprodukten von Isosorbid, sowie deren Mischungen.

13. Wärmespeichersystem (WSS) nach einem der vorstehenden Ansprüche, wobei es sich bei dem Lösungsmittel um Ethanol handelt.

14. Verfahren zur Steuerung der Kristallisation eines Phasenwechselmaterials (PCM) (2), das in einem Behälter (1) eines Wärmespeichersystems (WSS) nach einem der vorstehenden Ansprüche enthalten ist, **dadurch gekennzeichnet, dass** es das Einspritzen eines zweiphasigen Lösungsmittels im flüssigen Zustand in das im Behälter enthaltene Phasenwechselmaterial (PCM) im unteren Teil des Behälters (1), und das Ausleiten des Lösungsmittels im gasförmigen Zustand im oberen Teil des Behälters (1) umfasst.

15. Verfahren zur Speicherung von Wärmeenergie mittels eines Wärmespeichersystems (WSS) nach einem der Ansprüche 1 bis 13, **dadurch gekennzeichnet, dass** es umfasst:
- eine Aufladephase, in deren Verlauf ein Wärmeträgerfluid seine Wärme an ein in einem Behälter (1) enthaltenes Phasenwechselmaterial (PCM) (2) abgibt, was zum Schmelzen des Phasenwechselmaterials (PCM) (2) führt,
- eine Entladephase, in deren Verlauf das Phasenwechselmaterial (PCM) (2) seine Wärme an das Wärmeträgerfluid abgibt, was zur Kristallisation des Phasenwechselmaterials (PCM) führt, und die das Einspritzen eines zweiphasigen Lösungsmittels im flüssigen Zustand in das Phasenwechselmaterial (PCM) im unteren Teil des Behälters (1), und das Ausleiten des Lösungsmittels im gasförmigen Zustand im oberen Teil des Behälters (1) umfasst.

16. Verfahren nach dem vorstehenden Anspruch, das das Kondensieren des aus dem Behälter (1) ausgeleiteten gasförmigen Lösungsmittels durch einen externen Wärmetauscher (9) umfasst.

17. Verfahren nach einem der zwei vorstehenden Ansprüche, wobei der Gasdruck im Behälter (1) angepasst wird, um die Zustandsänderungstemperatur des Lösungsmittels zu steuern.

## Claims

1. Thermal Storage System (TSS) by Phase Change Material (PCM) (2) comprising:
- a tank (1) intended to contain a Phase Change Material (PCM) (2),
- a circulation system immersed in the tank (1), intended for the circulation of a heat-transfer fluid coming from an external network for circulating heat-transfer fluid (20, 21),
**characterised in that** it comprises a device for controlling the crystallisation of the Phase Change Material (PCM) (2) comprising:
- an injection module configured to inject, in the lower portion of the tank (1), in the Phase Change Material (PCM) (2), a two-phase solvent, in the liquid state,
- an evacuation module configured to evacuate the two-phase solvent in the gaseous state in the upper portion of the tank (1), opposite the lower portion.

2. Thermal Storage System (TSS) according to claim 1 comprising a Phase Change Material (PCM) subject to undercooling.

3. Thermal Storage System (TSS) according to the preceding claim wherein the Phase Change Material (PCM) has an undercooling corresponding to the difference between the theoretical crystallisation temperature thereof and the actual crystallisation temperature thereof equal to or greater than 2°C.

4. Thermal Storage System (TSS) according to any one of the preceding claims comprising an external heat exchanger (9) configured to condense the gaseous solvent evacuated from the tank (1) through the evacuation module, the external heat exchanger (9) being a condenser exchanging the heat between the gaseous solvent and the ambient air (19) or between the gaseous solvent and a liquid.

5. Thermal Storage System (TSS) according to any one of the preceding claims comprising an expansion space (10) composed of at least one inert gas and a module for returning non-condensable gases (12) of the expansion space (10) from the external heat exchanger (9) to the tank (1).

6. Thermal Storage System (TSS) according to the preceding claim wherein the module for returning non-condensable gases (12) is connected to the module for injecting the solvent in the liquid state so as to inject the non-condensable gases (12) of the expansion space (10) in the lower portion of the tank (1) individually or in a mixture with the solvent in the liquid state, the solvent mixture in the liquid state and non-condensable gases (12) comprising a quantity of solvent less than or equal to 5% of the total quantity of the mixture.

7. Thermal Storage System (TSS) according to the preceding claim wherein the Phase Change Material (PCM) is soluble in the solvent.

8. Thermal Storage System (TSS) according to claim 5 wherein the module for returning non-condensable gases (12) is connected to the upper portion of the tank (1) so as to inject the non-condensable gases in the expansion space (10), the Phase Change Material (PCM) is insoluble in the solvent.

9. Thermal Storage System (TSS) according to any one of the preceding claims wherein the injection module comprises an injection column (18) configured to be of a manometric height adapted to the injection of the solvent in the liquid state in the tank (1) or an injection pump (11) intended to allow the injection of the solvent in the tank (1).

10. Thermal Storage System (TSS) according to any one of the preceding claims comprising a reservoir (8) connected to the module for injecting the solvent and configured to receive the solvent in the liquid state and supply the injection module.

11. Thermal Storage System (TSS) according to any one of the preceding claims wherein the circulation system immersed in the tank (1) comprises a tube cluster (5) intended to be immersed in the Phase Change Material (PCM) (2) and intended for the circulation of the heat-transfer fluid.

12. Thermal Storage System (TSS) according to any one of the preceding claims wherein the Phase Change Material (PCM) (2) is selected from alcohol sugars, derivative products of alcohol sugars and salt hydrates, advantageously the Phase Change Material (PCM) (2) is selected from xylitol, sorbitol, mannitol, erythritol, isosorbide and derivative products of isosorbide, as well as mixtures thereof.

13. Thermal Storage System (TSS) according to any one of the preceding claims wherein the solvent is ethanol.

14. Method for controlling the crystallisation of a Phase Change Material (PCM) (2) contained in the tank (1) of a Thermal Storage System (TSS) according to any one of the preceding claims **characterised in that** it comprises the injection in the Phase Change Material (PCM) contained in the tank of a two-phase solvent, in the liquid state, in the lower portion of the tank (1) and the evacuation of the solvent in the gaseous state in the upper portion of the tank (1).

15. Method for storing thermal energy by a Thermal Storage System (TSS) according to any one of claims 1 to 13 **characterised in that** it comprises:
- a loading phase during which a heat-transfer fluid transfers the heat thereof to a Phase Change Material (PCM) (2) contained in a tank (1) leading to the fusion of the Phase Change Material (PCM) (2),
- an unloading phase during which the Phase Change Material (PCM) (2) transfers the heat thereof to the heat-transfer fluid leading to the crystallisation of the Phase Change Material (PCM) and comprising the injection in the Phase Change Material (PCM) of a two-phase solvent, in the liquid state, in the lower portion of the tank (1) and the evacuation of the solvent, in the gaseous state, in the upper portion of the tank (1).

16. Method according to the preceding claim comprising the condensation of the gaseous solvent evacuated from the tank (1) through an external thermal exchanger (9).

17. Method according to any one of the two preceding claims wherein the gaseous pressure in the tank (1) is adjusted so as to control the temperature for changing the state of the solvent.
